# EUROPEAN PATENT APPLICATION

(11) **EP 3 702 987 A1**
(43) Date of publication of application: **02.09.2020**
(21) Application number: 20159780.4
(22) Date of filing: 27.02.2020
(51) Int. Cl.: G06Q 10/08

(54) **GAS STORAGE CANISTER EXCHANGE SYSTEM AND LOGISTICS AND CLOUD MANAGEMENT SYSTEM OF GAS STORAGE CANISTER EXCHANGE**

(30) Priority: 27.02.2019 TW 108106942
(71) Applicant: Asia Pacific Fuel Cell Technologies, Ltd., Miaoli 35053 (TW)
(72) Inventor: Cheng, Chin-Hsien, 35053 Miaoli (TW); Tien, Yao-Ting, 35053 Miaoli (TW)
(74) Representative: Goddar, Heinz J.

(57) **Abstract**

A gas storage canister exchange system (3) at least includes at least one full-filled gas storage canister (36) and at least one exchange cabinet (30). The full-filled gas storage canister (36) is used to supply gas. The exchange cabinet (30) has a storage space and an exchange interface. When a user wants to perform a gas storage canister exchange, an empty gas storage canister (36) is placed on the exchange interface, then the empty gas storage canister (36) is recycled by the exchange cabinet (30), then the full-filled gas storage canister (36) is sent to the exchange interface and system information is updated simultaneously, and finally the full-filled gas storage canister (36) is acquired by the user, thereby completing the gas storage canister exchange. The storage space is used to store the full-filled gas storage canister (36) and/or the empty gas storage canister (36). The object of exchanging and managing gas storage canisters is achieved.

## Description

### CROSS-REFERENCE TO RELATED APPLICATION

This application claims priority from Taiwan Patent Application No. 108106942, filed on February 27, 2019, the entire contents of which are incorporated herein by reference for all purposes.

### FIELD OF THE INVENTION

The present invention relates to a gas storage canister exchange system, a logistics management system of gas storage canister exchange, and a cloud management system of gas storage canister exchange. More particularly, the present invention relates to a system utilizing an exchange cabinet to achieve gas storage canister exchange. Through a logistics management mechanism and/or a cloud management system, the gas storage canister exchange system is appropriate to be used in lots types of fields and applications, for example vehicle and/or non-vehicle applications.

### BACKGROUND OF THE INVENTION

Great attention from countries around the world has been attracted due to environmental pollution and hazards caused by using fossil fuel for vehicles., Therefore, new energy vehicles have come out one after another, for example, gas taxis and fuel cell vehicles. These new energy vehicles have one common challenge which is serious shortage of refueling stations. It causes not only high difficulty in promoting new energy vehicles but also discouraging users from using them.

At present, some producers have developed low-pressure gas storage canisters (e.g. low-pressure metal-hydride hydrogen storage canisters), which is able to "refuel" vehicles such as fuel cell electric scooter by swapping gas storage canister. Each scooter can be driven on the road with equipping at least one gas storage canister. Canister swapping site is necessary for users when they running out of fuel. However, management of large quantities of canisters at swapping site is quite challenging if we do it manually. Therefore, how to make these gas storage canisters effectively and properly used, exchanged, recycled, supplemented, informatized, data analyzed and managed is a major challenge and problem for the current industry to achieve the goal of commercialization.

Moreover, the most urgent issue that needs to be solved is how to design a device and a logistics and/or cloud management system which have following characteristics or function: safety, convenience, quickly exchange, recycle, and auto replenishment for gas storage canisters.

### SUMMARY OF THE INVENTION

The following noun explanations are presented for purpose of illustration only, but not for limiting the scope of the present invention in any manner.

The phrase "empty canister" means a gas storage canister having no gas inside. The phrase "full-filled canister" means a gas storage canister fully filled with gas. The phrase "no canister" means there is no gas storage canister existed. The phrase "get canister" means to get out or get back a gas storage canister. The phrase "replenish canister" means to replenish a gas storage canister (e.g. a full-filled gas storage canister). The phrase "exchange canisters" means to exchange a gas storage canister with another gas storage canister or to exchange an empty gas storage canister for a full-filled gas storage canister. The phrase "get canister with no canister exchanged" means to directly acquire a full-filled gas storage canister without having any gas storage canister to be exchanged. The phrase "exchange controller" means an exchange control device includes but not limited to software and hardware.

A purpose of the present invention is to provide a gas storage canister exchange system which is able to achieve purpose of gas storage canister exchange and management through applications among the gas storage canister, the exchange cabinet, the exchange interface and/or the user interface.

Another purpose of the present invention is to provide a gas storage canister exchange system which is able to provide logistic mechanisms such as exchange, replenishment and recycle of gas storage canisters. When a canister replenishment message came from the gas storage canister exchange system is received, the full-filled gas storage canisters filled by a central gas-filling factory or station are well-managed in a high-efficiency way through the logistics management system and respectively delivered to the designated gas storage canister exchange systems, and the empty gas storage canisters are recycled. It is convenient for the user to perform a gas storage canister exchange nearby.

Another purpose of the present invention is to provide a cloud management system of gas storage canister exchange which is able to find out a location and information of the gas storage canister exchange system. A user can use a mobile application or login with any network to connect with a remote server or the cloud management system to find out the location of the gas storage canister exchange system and a number of exchangeable gas storage canisters, so that the user is able to quickly arrive at the location to perform the gas storage canister exchange and obtain a related information.

Another purpose of the present invention is to provide a gas storage canister exchange system which is able to identify if a gas storage canister is certified. By utilizing a sensing component to read the information of an identification label on the gas storage canister, the information is compared with a database built on a remote server and/or the cloud management system online so as to determine if the gas storage canister is certified.

Another purpose of the present invention is to provide a gas storage canister exchange system which is able to directly provide a full-filled gas storage canister to the user with no gas storage canister or directly recover a gas storage canister under the requirement of special occasions. Through the sensing component and/or the user interface of each gas storage canister exchange system, a related certification is provided by the user or certification data is entered by the user to obtain an approval from a remote server or the cloud management system for acquiring the full-filled gas storage canister nearby without having a gas storage canister to be exchanged or directly having the gas storage canister recycled.

Another purpose of the present invention is to provide a cloud management system which has the functions of information control and data analysis. All the information including gas storage canister exchange and logistics actions (e.g. notification, replenishment and recycle) is controlled by the cloud management system. Simulations and analyses of usage mode, exchange frequency, ambient temperature, humidity, vehicle or non-vehicle information, driving mileage, historical record, and carbon reduction are performed based on the data received.

In accordance with an aspect of the present invention, there is provided a gas storage canister exchange system. The gas storage canister exchange system at least includes at least one full-filled gas storage canister and at least one exchange cabinet. The full-filled gas storage canister is used to supply gas. The exchange cabinet has a storage space and an exchange interface. When a user wants to perform a gas storage canister exchange, at least one external empty gas storage canister is first placed on the exchange interface, then the empty gas storage canister is recycled by the exchange cabinet, then the full-filled gas storage canister is sent to the exchange interface and system information is updated simultaneously, and finally the full-filled gas storage canister is acquired by the user, thereby completing the gas storage canister exchange. The storage space is used to store the at least one full-filled gas storage canister and/or the at least one empty gas storage canister.

In accordance with an aspect of the present invention, there is provided a logistics management system of gas storage canister exchange. The logistics management system of gas storage canister exchange includes at least one gas storage canister exchange system. The gas storage canister exchange system at least includes at least one full-filled gas storage canister and at least one exchange cabinet. The full-filled gas storage canister is used to supply gas. The exchange cabinet has a storage space. The storage space is used to store the at least one full-filled gas storage canister and/or at least one empty gas storage canister. The exchange cabinet has an exchange interface used to provide a gas storage canister exchange. When a storage amount of the full-filled gas storage canister of each the gas storage canister exchange system is less than a safe storage amount, a canister replenishment message is sent to a logistics management system and further sent to a logistics center after organization so as to perform a canister replenishment and recycle operation.

In accordance with an aspect of the present invention, there is provided a cloud management system of gas storage canister exchange. The cloud management system of gas storage canister exchange includes at least one gas storage canister exchange system and a cloud management device. The gas storage canister exchange system is used to perform a replenishment, an acquirement, an exchange and a recycle of gas storage canisters. The gas storage canister exchange system at least includes at least one full-filled gas storage canister and at least one exchange cabinet. The full-filled gas storage canister is used to supply gas. The exchange cabinet has a storage space used to store the full-filled gas storage canister and/or at least one empty gas storage canister. The exchange cabinet has an exchange interface used to provide a gas storage canister exchange. The cloud management device has at least one server used for receiving and sending messages, storage, computation, calculation, publishing or notification.

The above contents of the present invention will become more readily apparent to those ordinarily skilled in the art after reviewing the following detailed description and accompanying drawings, in which:

### BRIEF DESCRIPTION OF THE DRAWINGS

FIG. 1 schematically illustrates the configuration of a gas storage canister exchange system, a logistics management system and a cloud management system according to an embodiment of the present invention;
FIG. 2 schematically illustrates the flow chart of a reservation of gas storage canister exchange combining with a remote server or a cloud management system according to an embodiment of the present invention;
FIG. 3 schematically illustrates the exchange flow chart of the gas storage canister exchange system according to an embodiment of the present invention;
FIGS. 4-6 schematically illustrate embodiments of a gas storage canister exchange system of the present invention;
FIG. 7 schematically illustrates another embodiment of an expanded gas storage canister exchange system of the present invention;
FIG. 8 schematically illustrates the operation flow chart of a gas storage canister exchange system, a logistics management system and a cloud management system according to an embodiment of the present invention;
FIG. 9 schematically illustrates an embodiment of a gas storage canister of the present invention;
FIGS. 10-11 schematically illustrate gas storage canisters applied to vehicle and non-vehicle according to embodiments of the present invention; and
FIG. 12 schematically illustrates the situation of a gas storage canister exchange of the present invention.

### DETAILED DESCRIPTION OF THE PREFERRED EMBODIMENT

The present invention will now be described more specifically with reference to the following embodiments. It is to be noted that the following descriptions of preferred embodiments of this invention are presented herein for purpose of illustration and description only. It is not intended to be exhaustive or to be limited to the precise form disclosed.

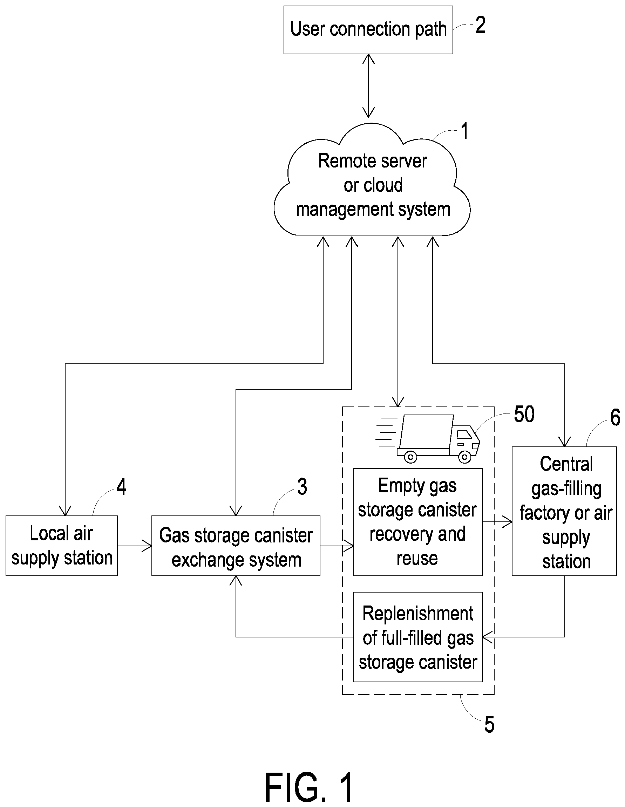

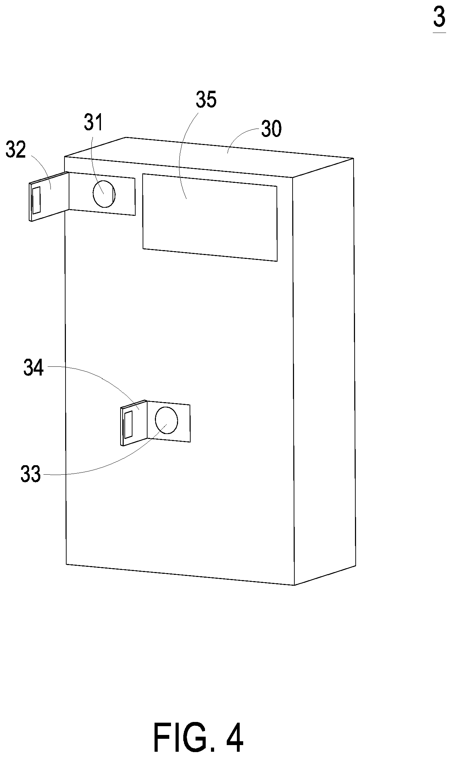

FIG. 1 schematically illustrates the configuration of a gas storage canister exchange system, a logistics management system and a cloud management system according to an embodiment of the present invention. At least one remote server or cloud management system 1 is respectively connected with a user connection path 2, a gas storage canister exchange system 3, a local gas-filling station 4, a logistics management system 5, and a central gas-filling factory or station 6 through a transmission network for controlling operations of the whole system. At least one gas storage canister exchange system 3 has the functions of providing related information, data link, and gas storage canister exchange, replenishment and recycle. The gas storage canister exchange system 3 is utilized by the user to exchange gas storage canisters, so a storage amount of full-filled gas storage canister is kept lowering. When the storage amount of full-filled gas storage canister is less than a safe storage amount, a canister replenishment message is sent to the remote server or cloud management system 1, or the logistics management system 5. The canister replenishment messages came from the gas storage canister exchange systems 3 or exchange cabinets 30 (as shown in FIG. 4) of various regions are first received and organized and then sent to the logistics management system 5, or are directly received and controlled by the logistics management system 5. Afterwards, a replenishment operator of a logistics center delivers the full-filled gas storage canisters to the designated gas storage canister exchange systems 3 or exchange cabinets 30 to perform at least one canister replenishment operation through a logistics vehicle 50, and simultaneously delivers the exchanged empty gas storage canisters to the central gas-filling factory or station 6 for recycle, refill and reuse. The canister replenishment operation is repeated over and over again. In some embodiments, the user connection path 2 can be linked by using applications including but not limited to a PC, a smart phone and a PDA to connect with the remote server or cloud management system 1 to build a wired connection or a wireless connection for data-transmitting and message-accessing.

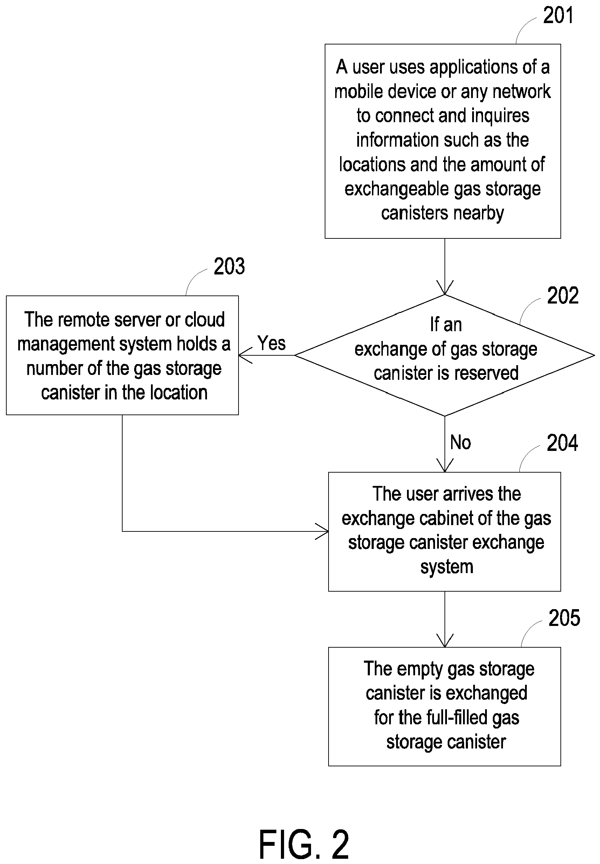

Please refer to FIG. 1 and FIG. 2. FIG. 2 schematically illustrates the flow chart of a reservation of gas storage canister exchange combining with a remote server or a cloud management system according to an embodiment of the present invention. First of all, as shown in step 201, a user uses applications of a mobile device or any network to connect to the remote server or cloud management system 1 (or login a system program) and then inquires information such as the locations and the amount of exchangeable gas storage canisters nearby. Next, as shown in step 202, a judgment that if an exchange of gas storage canister is reserved online is determined by the remote server or cloud management system 1. For example, the system may ask the user if he/she wants to reserve a gas storage canister exchange online, but not limited herein. If the judgment result of the step 202 is YES, the remote server or cloud management system 1 holds a number of the gas storage canisters in the location reserved by the user, as shown in step 203, so that the user can exchange the gas storage canisters at that location at the time reserved by the user. On the other hand, if the judgment result of the step 202 is NO, the user directly arrives at the exchange cabinet of the gas storage canister exchange system 3 as shown in step 204. Then, as shown in step 205, the empty gas storage canister is exchanged for the full-filled gas storage canister. The flow chart is finished here. Additionally, the user may click to choose a link navigation function provided by the remote server or cloud management system 1, so that the user may follow the guided route to arrive at the location for exchange.

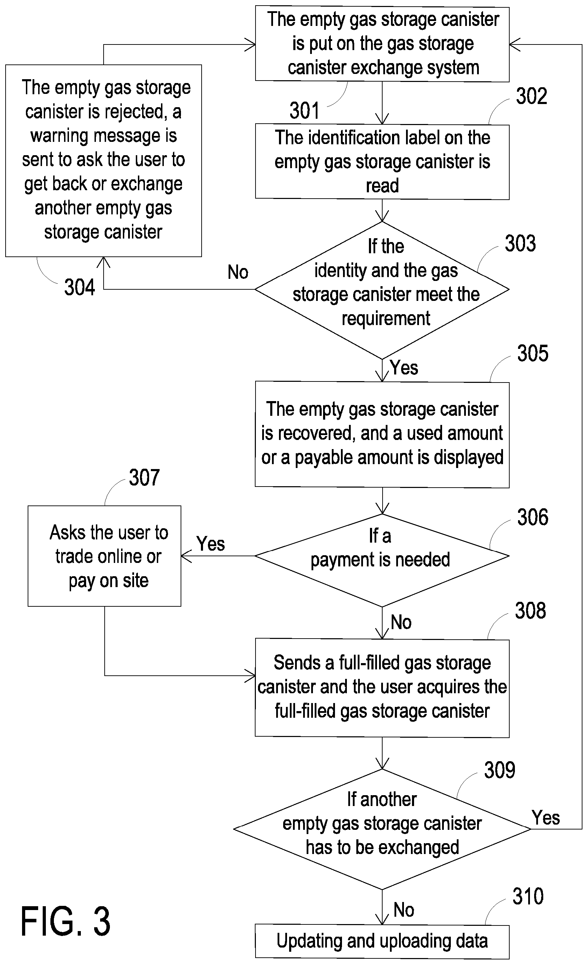

Please refer to FIG. 1 and FIG. 3. FIG. 3 schematically illustrates the exchange flow chart of the gas storage canister exchange system according to an embodiment of the present invention. As shown in step 301, after the user arrives at the gas storage canister exchange system, the empty gas storage canister is put on the exchange interface of the exchange cabinet of the gas storage canister exchange system 3. Next, as shown in step 302, an information of an identification label disposed on the empty gas storage canister is read by a sensing component of the exchange cabinet of the gas storage canister exchange system 3. Next, as shown in step 303, a judgment that if an identity of the user and a recognition of the empty gas storage canister meet the requirement is determined. If the judgment of the step 303 is NO (i.e. any one of the identity and the recognition does not meet the requirement), as shown in step 304, the empty gas storage canister is rejected, a warning message or an error message is displayed to ask the user to get the empty gas storage canister back or exchange another empty gas storage canister, and then the step 301 is performed again after the step 303. If the judgment of the step 303 is YES (i.e. both the identity and the recognition meet the requirement), as shown in step 305, the empty gas storage canister is recycled, and after calculated by the system (e.g. based on the gas capacity, weight or flow of the gas storage canister), an information showing a used amount of gas or fuel of the empty gas storage canister or a payable amount is displayed. Next, as shown in step 306, a judgment that if a payment is needed is determined. If the user is not a paid user, a payment is necessary. If the user is a paid user, no payment is needed. In some embodiments, the payment plan is also confirmed in this step according to the identity of the user. For example, the monthly, seasonal or annual membership of the user is confirmed. If the judgment of the step 306 is NO, as shown in step 308, the gas storage canister exchange system 3 sends a full-filled gas storage canister to the exchange interface and updates the identification label and the system information, so that the user can get the full-filled gas storage canister. If the judgment of the step 306 is YES (i.e. a payment is needed), as shown in step 307, the gas storage canister exchange system 3 asks the user to trade online or pay on site. After the trade or the payment is confirmed, the step 308 is performed after the step 307, so that the user can get the full-filled gas storage canister. Next, as shown in step 309, a judgment that if another empty gas storage canister is to be exchanged is determined. For example, the gas storage canister exchange system 3 may display the question on a screen for the user to choose. If the judgment of the step 309 is YES, the step 301 is performed after the step 309. If the judgment of the step 309 is NO, a step 310 of updating and uploading data to the remote server or cloud management system 1 is performed after the step 309, and the flow chart is finished here. In some embodiments, if the trade or the payment is failed or not completed in the step 307, the exchange is canceled, and the step 304 is performed after the step 307. That is, the empty gas storage canister is rejected, a warning message or an error message is sent to ask the user to get the empty gas storage canister back or exchange another empty gas storage canister.

Please refer to FIG. 1 again. The gas storage canister exchange system 3 uses the sensing component to read the information on the identification label on the gas storage canister and connects to a database of the remote server or cloud management system 1 to determine whether the empty gas storage canister is certified. When the empty gas storage canister is certified, the empty gas storage canister is recycled by the exchange cabinet 30, and the full-filled gas storage canister is sent to the exchange interface and the system information is updated, so that the full-filled gas storage canister is acquired by the user. When the empty gas storage canister is not certified, an error message is sent to ask the user to get the empty gas storage canister back or exchange another empty gas storage canister. In addition, a used amount of gas or fuel of the gas storage canister is calculated (e.g. based on the gas capacity, weight or flow of the gas storage canister) by the gas storage canister exchange system 3 according to the data read by the sensing component, so as to charge the user or link to a cash flow system for requesting a payment or a debit.

Another embodiment of the present invention may ignore the verification of the gas storage canister and/or payment mechanism. For example, the flow chart shown in FIG. 3 may be simplified as another type of gas storage canister exchange system. This gas storage canister exchange system at least includes one or more full-filled gas storage canisters for supplying gas, one or more exchange cabinets having a storage space to store one or more full-filled gas storage canisters and/or one or more empty gas storage canisters, and at least one user interface disposed on the one or more exchange cabinets. An exchange interface is disposed on each of the exchange cabinets. When a user wants to perform a gas storage canister exchange, an external empty gas storage canister is placed on the exchange interface, and then the empty gas storage canister is recycled by the exchange cabinet. Afterwards, the full-filled gas storage canister is sent to the exchange interface and the system information is updated simultaneously. Finally the full-filled gas storage canister is acquired by the user, thereby completing the gas storage canister exchange.

In addition, another embodiment of the present invention may be a gas storage canister exchange system having individual function or composite functions. For example, a mode of exchanging canisters, getting a canister with no canister exchanged, or recycling canisters may be applied as a single-function system, or the three modes may be combined as a composite system. In other words, except for the embodiment of exchanging an empty gas storage canister for a full-filled canister described above, the gas storage canister exchange system may be individually designed as a system only recycling canisters (including the empty gas storage canister and the gas storage canister not to be used anymore), a system only providing the full-filled gas storage canisters, or a system having any one or more functions described above.

Moreover, the gas storage canister exchange system 3 can be connected or combined in parallel by any manner for expanding, so that the storage amount and the exchange amount of the gas storage canister can be increased, and the gas storage canister exchange system 3 can be disposed on any place, which is very convenient. By the replenishment operator, the replenishment of the full-filled gas storage canister and/or the recycle of the empty gas storage canister can be completed. The sensing component of each gas storage canister exchange system 3 is disposed adjacent to the exchange interface (not shown). The sensing component includes a barcode scanner, an electronic label reader and writer, a RFID reader and writer, a NFC interface, an electronic device having a reading function, an electronic device having a writing function, and an electronic device having reading and writing functions, but not limited herein. The identification label can be a pattern, an image, an electronic label (e.g. a RFID tag or NFC tag), a linear barcode, a two-dimensional barcode or a quick response (QR) code, but not limited herein. In addition, the gas storage canister exchange system 3 of the present invention may only combined or connected with the logistics management system 5 for exchanging, replenishing and recycling the gas storage canisters, which can totally be varied to meet the practical demands or requirements.

In some embodiments, the present invention provides a logistics management system of gas storage canister exchange. The logistics management system of gas storage canister exchange at least includes at least one gas storage canister exchange system. The gas storage canister exchange system at least includes at least one full-filled gas storage canister and at least one exchange cabinet. The full-filled gas storage canister is used to supply gas. The exchange cabinet has a storage space used to store the at least one full-filled gas storage canister and/or at least one empty gas storage canister. The exchange cabinet has an exchange interface provided for gas storage canister exchange. When a storage amount of the full-filled gas storage canister of each the gas storage canister exchange system is less than a safe storage amount, a canister replenishment message is sent to a logistics management system and further sent to a logistics center after organization so as to perform a canister replenishment and recycle operation.

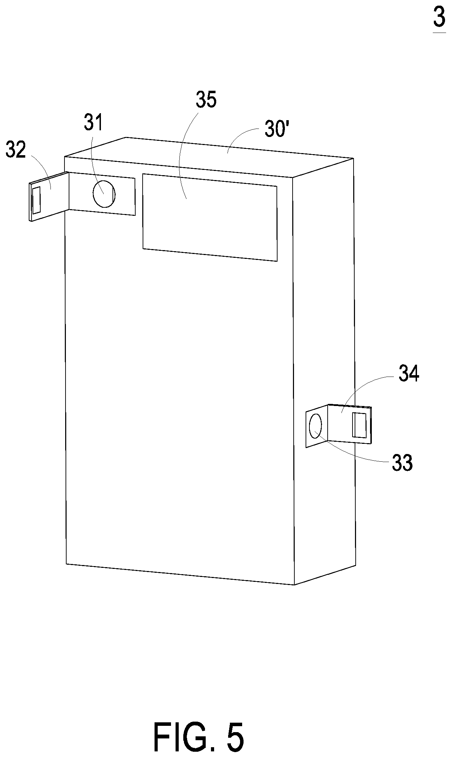

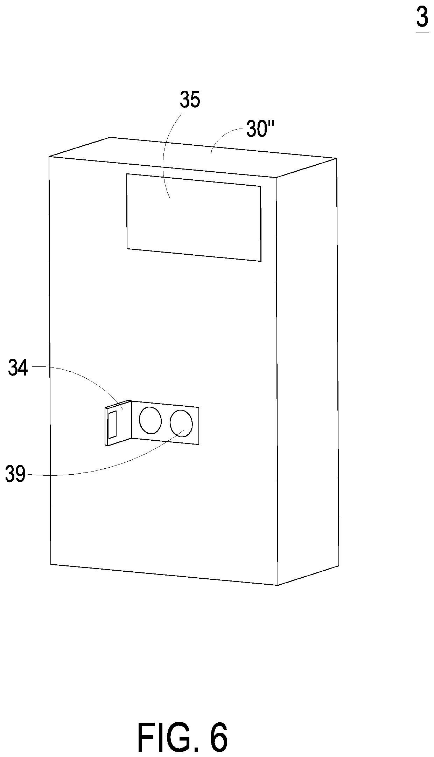

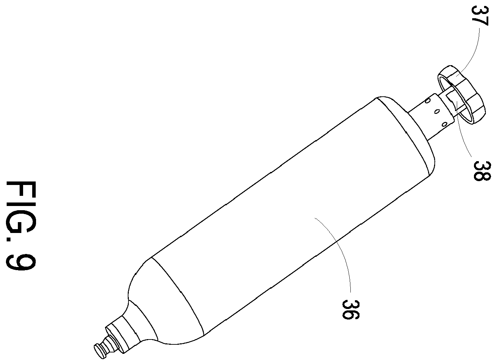

FIGS. 4-6 schematically illustrate embodiments of a gas storage canister exchange system of the present invention. The gas storage canister exchange system 3 (e.g. the exchange cabinet 30) may be designed to continuously receive a plurality of empty gas storage canisters and then sequentially send the full-filled gas storage canisters to be exchanged. For example, two empty gas storage canisters are sequentially put on an inlet 31 of the exchange interface, the identification labels 38 (as shown in FIG. 9) are read by the gas storage canister exchange system 3, and the two empty gas storage canisters are received by the gas storage canister exchange system 3. After the payment step is confirmed, two full-filled gas storage canisters are sequentially sent to an outlet 33 of the exchange interface. After the identification labels and system information are updated, the two full-filled gas storage canisters are acquired by the user. A user interface 35 is disposed on one side of the exchange cabinet 30, so as to provide the information, the current status and the operation state of the gas storage canister exchange system 3 to the user. In some embodiments, the exchange cabinet can be designed as an exchange cabinet 30' having an inlet and an outlet on different sides. As shown in FIG. 5, the empty gas storage canister can be put into an inlet 31 on one side of the exchange cabinet 30', and the full-filled gas storage canister can be sent out through an outlet 33 on another side of the exchange cabinet 30'. Even more, the exchange cabinet can be designed as an exchange cabinet 30" having an inlet and outlet port. As shown in FIG. 6, two empty gas storage canisters can be put into the inlet and outlet port 39. After identified by the system, the two empty gas storage canisters are recycled. Then after the payment step is confirmed, two full-filled gas storage canisters are sent out through the same inlet and outlet port 39 for acquirement of the user. The design of the exchange cabinet can be totally varied to meet the demands of the practical application. Furthermore, the inside of the gas storage canister exchange system 3 can be divided into an empty gas storage canister storage area and a full-filled gas storage canister storage area, so that it is convenient for the replenishment operator to identify and perform the exchange and replenishment of the gas storage canisters. The exchange interface, including the inlet 31, the outlet 33, and the inlet and outlet port 39, is connected with the user interface 35. The exchange controller inside the gas storage canister exchange system 3 is utilized for mechatronics integration (e.g. mechanical arms, not shown), so that the gas storage canister exchange is controlled and implemented. The gas storage canister exchange system 3 may further be provided with detection mechanism such as an electronic balance, a gas flow meter or a pressure meter according to practical requirements, so as to calculate the used amount of gas or fuel of the gas storage canister described above. Alternatively, information of the final gas capacity, weight, or flow of the gas storage canister 36, or the used hours or mileage is stored on the identification label 38 in advance through the vehicle or non-vehicle system, or the foregoing information is directly uploaded to the remote server or cloud management system 1.

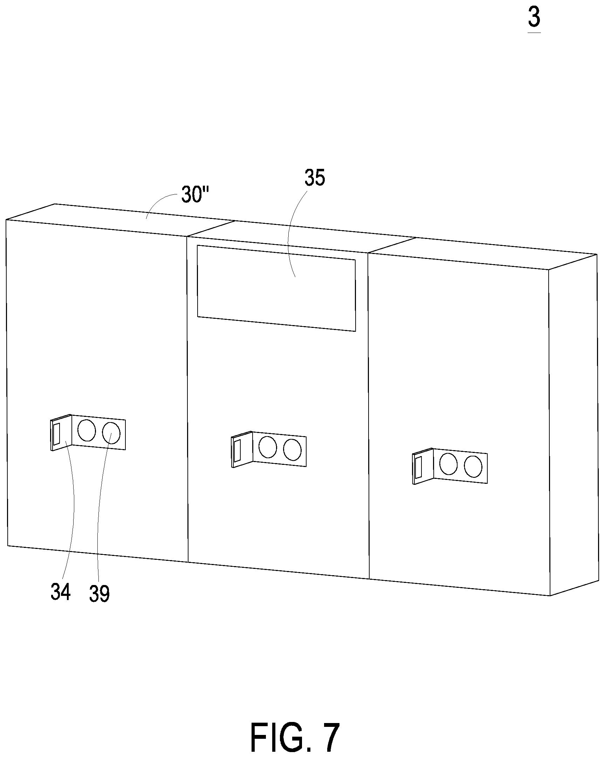

FIG. 7 schematically illustrates another embodiment of an expanded gas storage canister exchange system of the present invention. The gas storage canister exchange system 3 can be unlimitedly expanded to meet the practical demands, and can be designed to include one or more user interfaces 35. If a total storage amount of gas storage canisters of each gas storage canister exchange system 3 is 200, two additional gas storage canister exchange systems 3 connected in parallel with the original one respectively in the left side and the right side may increase the total storage amount to 600. The storage amount of each gas storage canister exchange system and the total storage amount of the gas storage canister exchange systems can be varied to meet the practical demands.

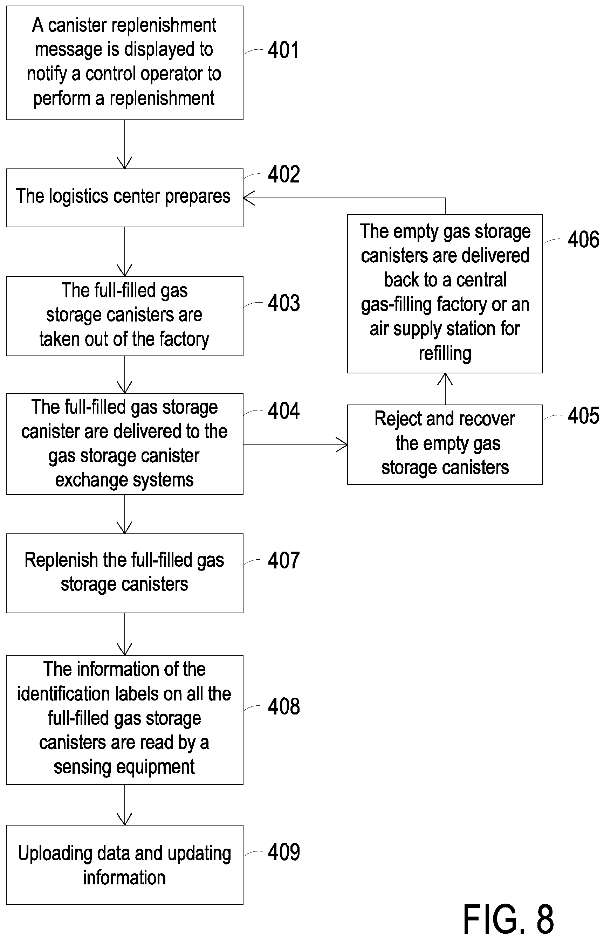

Please refer to FIG. 1 and FIG. 8. FIG. 8 schematically illustrates the operation flow chart of a gas storage canister exchange system, a logistics management system and a cloud management system according to an embodiment of the present invention. As shown in step 401, after the information of the gas storage canister exchange systems 3 of various regions are integrated by the cloud management system 1, if a storage amount of the full-filled gas storage canisters is less than a safe storage amount, a canister replenishment message is displayed on the screen so as to notify a control operator of the logistics management system to perform a replenishment. Next, as shown in step 402, a logistics center prepares and organizes for replenishment. Then, as shown in step 403, the full-filled gas storage canisters are taken out of the factory by a replenishment operator. For example, the replenishment operator may drive a logistics vehicle, control a drone, or control an unmanned vehicle to deliver the full-filled gas storage canisters, but not limited herein. Next, as shown in step 404, the full-filled gas storage canisters are respectively delivered to each of the gas storage canister exchange systems according to the replenishment message instructed by the system. Two tasks are performed herein. One of the tasks is to unload and recycle the empty gas storage canisters as shown in step 405, and the other one of the tasks is to replenish the full-filled gas storage canisters as shown in step 407. If the recycle shown in step 405 is performed, the data is then uploaded, and the empty gas storage canisters are delivered back to a central gas-filling factory or station for refilling as shown in step 406. The step 402 is performed after the step 406. If the replenishment shown in step 407 is performed, the information of the identification labels on all the full-filled gas storage canisters are read by a sensing equipment or a sensing component of the gas storage canister exchange systems 3 as shown in step 408. A step 409 of uploading data and updating information is performed after the step 408, and the flow chart is finished here.

In some embodiments, please refer to FIG. 1 and FIGS. 4-7. Each the gas storage canister exchange system 3 can directly provide a full-filled gas storage canister to the user with no gas storage canister exchanged or directly recycle a gas storage canister under the requirement of special occasions. Through the sensing component and/or the user interface 35, a related certification (e.g. a barcode or an identification label) is provided by the user or certification data is entered by the user so as to determine whether the user is certified. When a technician is testing and repairing or when there is no gas storage canister around, the technician can acquire a full-filled gas storage canister with no gas storage canister exchanged or directly have the gas storage canister recycled nearby. Thus, the inconvenience of carrying gas storage canisters is solved. The sensing component is used to read and write information of the identification label or provide a recognition of the gas storage canister and an identity of the user. The user interface 35 (as shown in FIGS. 4-6) is a transmission and display interface which is provided to the user for input and operation, and the user interface is connected with a remote server or a cloud management system 1 through a transmission network so as to display a status and a related information between the gas storage canister, the gas storage canister exchange system 3, and the remote server or the cloud management system 1 for uploading data and updating the system information. In some embodiments, the gas storage canister exchange system 3 is combined with a local gas-filling station 4 to directly perform a gas-filling operation or a canister exchange and replenishment operation.

Additionally, according to an embodiment of the present invention, a cloud management system of gas storage canister exchange at least includes at least one gas storage canister exchange system and a cloud management device. The gas storage canister exchange system can be used to perform a replenishment, an acquirement, an exchange and a recycle of gas storage canisters. The gas storage canister exchange system at least includes at least one full-filled gas storage canister and at least one exchange cabinet. The full-filled gas storage canister is used to supply gas. The exchange cabinet has a storage space used to store the at least one full-filled gas storage canister and/or at least one empty gas storage canister. The exchange cabinet has an exchange interface disposed on the exchange cabinet and used to provide a gas storage canister exchange. The cloud management device has at least one server used for receiving and sending messages, storage, computation, calculation, publishing or notification.

The cloud management system described above has functions of information control and data analysis. All the information including gas storage canister exchange and logistics actions (e.g. notification, replenishment and recycle) is controlled by the server or the cloud management system. Simulations and analyses of usage mode, exchange frequency, ambient temperature, humidity, vehicle or non-vehicle information, driving mileage, historical record, and carbon reduction are performed based on the data received.

FIG. 9 schematically illustrates an embodiment of a gas storage canister of the present invention. As shown in FIG. 9, the handle 37 of the gas storage canister 36 is provided with an identification label 38 for accessing product-related information or storage data.

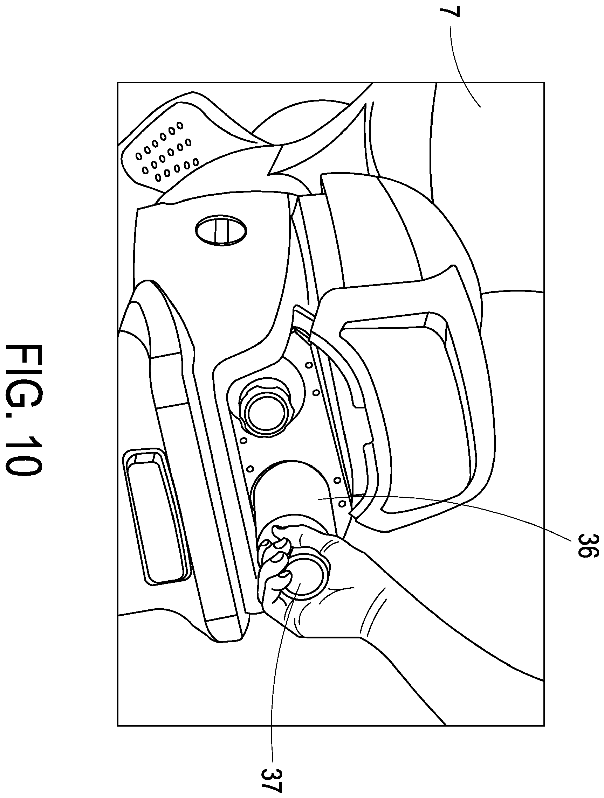

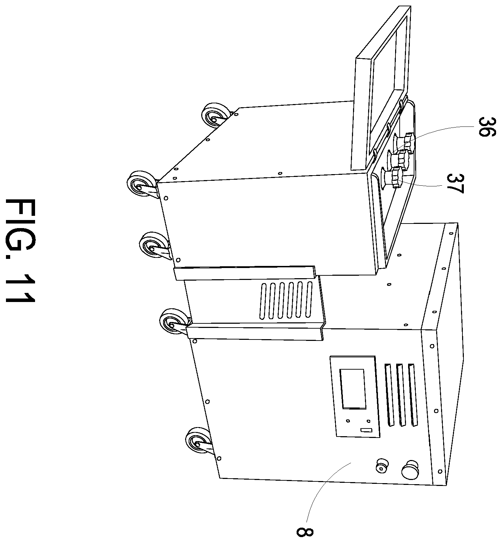

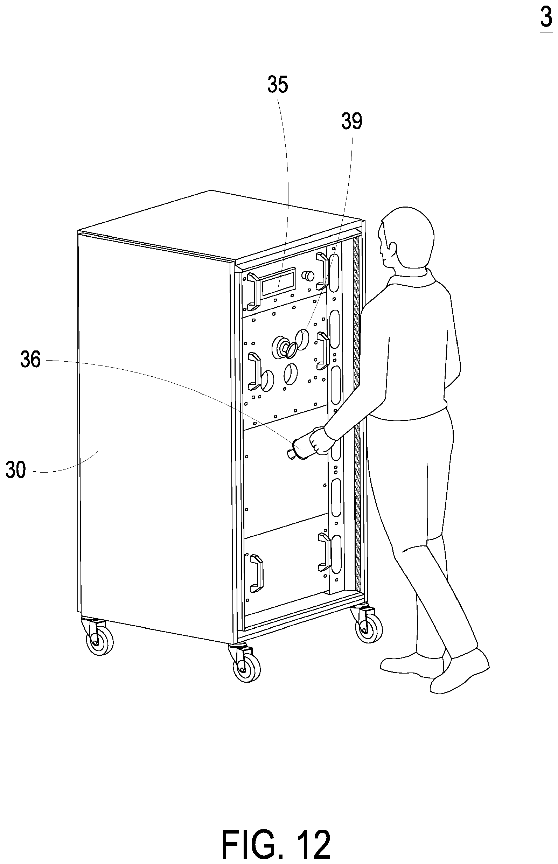

FIGS. 10-11 schematically illustrate gas storage canisters applied to vehicle and non-vehicle according to embodiments of the present invention. FIG. 12 schematically illustrates the situation of a gas storage canister exchange of the present invention. As shown in FIGS. 10-12, two insertion holes are provided at the rear of a fuel cell electric scooter 7 for inserting two gas storage canisters 36. When the system on the vehicle indicates that the fuel (e.g. hydrogen) is about to run out (not shown), the user uses the user connection path 2 (e.g. an application of a mobile device or any network) to connect to a remote server or cloud management system 1 and search for the information stored in the gas storage canister exchange system 3 and the information about the location and number of gas storage canisters that can be exchanged nearby, and then follows the instructions to move towards the location. After the user arrives at the location and shuts the fuel cell electric scooter 7 down, the user pulls the empty gas storage canister 36 out from the rear of the scooter 7 and then puts the empty gas storage canister 36 on the exchange interface of the gas storage canister exchange system 3. The information of the identification label 38 on the empty gas storage canister 36 is read by the gas storage canister exchange system 3. After the user identity is confirmed and the specification of the empty gas storage canister 36 is matched, the empty gas storage canister 36 is recycled. Through calculation of the remote server or cloud management system 1 or the gas storage canister exchange system 3, the used amount or the should-be-paid amount is displayed. After the user is confirmed as a paid user, another full-filled gas storage canister 36 is sent out to the exchange interface by the gas storage canister exchange system 3. After the system information is updated, the full-filled gas storage canister is acquired by the user. The user interface then displays a message on the screen querying if a next empty gas storage canister is going to be exchanged. If the user chooses "yes", then a step of putting the empty gas storage canister 36 on the exchange interface is performed. If the user chooses "no", then a step of updating and uploading data to the cloud management system is performed. Finally, the user may insert the full-filled gas storage canister back to the fuel cell electric scooter 7 and move on a next trip.

In this embodiment, the gas stored in the gas storage canister is hydrogen. However, a different gas storage canister can be used, or a different gas can be stored in the gas storage canister to meet the requirements of practical application. For example, the gas can be oxygen, carbon dioxide, nitrogen, helium, neon, argon, krypton, ammonia, methane, acetylene, propane, trifluoromethane, hexafluoropropane, heptafluoropropane or mixed gas.

From the above description, the present invention provides a gas storage canister exchange system, a logistics management system of gas storage canister exchange, and a cloud management system of gas storage canister exchange. By the applications among the gas storage canister, the exchange cabinet, the exchange interface and/or the user interface, the object of exchanging and managing gas storage canisters is achieved. Meanwhile, the logistics mechanisms such as exchange, replenishment and recycle of gas storage canisters are provided. When a canister replenishment message came from the gas storage canister exchange system is received, the full-filled gas storage canisters filled by a central gas-filling factory or station are well-managed in a high-efficiency way through the logistics management system and respectively delivered to the designated gas storage canister exchange systems, and the empty gas storage canisters are recycled. It is convenient for the user to perform a gas storage canister exchange nearby. On the other hand, the cloud management system can be utilized to find out a location and information of the gas storage canister exchange system. A user can use a mobile application or login with any network to connect with a remote server or the cloud management system to find out the location of the gas storage canister exchange system and a number of exchangeable gas storage canisters, so that the user is able to quickly arrive at the location to perform the gas storage canister exchange and obtain a related information. The cloud management system has the functions of information control and data analysis. All the information including gas storage canister exchange and logistics actions (e.g. notification, replenishment and recycle) is controlled by the cloud management system. Simulations and analyses of usage mode, exchange frequency, ambient temperature, humidity, vehicle or non-vehicle information, driving mileage, historical record, and carbon reduction are performed based on the data received.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A gas storage canister exchange system (3), at least comprising:
at least one full-filled gas storage canister (36) used to supply gas; and
at least one exchange cabinet (30) having a storage space and an exchange interface,
wherein when a user performs a gas storage canister (36) exchange, at least one empty gas storage canister (36) is first placed on the exchange interface, then the empty gas storage canister (36) is recycled by the exchange cabinet (30), then the full-filled gas storage canister (36) is sent to the exchange interface and a system information is updated simultaneously, and finally the full-filled gas storage canister (36) is acquired by the user, thereby completing the gas storage canister (36) exchange, and
wherein the storage space is used to store the at least one full-filled gas storage canister (36) and/or the at least one empty gas storage canister (36).

2. The gas storage canister exchange system (3) according to claim 1, further comprising at least one user interface disposed on the exchange cabinet (30), wherein an identification label is disposed on the full-filled gas storage canister (36) for accessing product-related information or storage data, and the identification label is a pattern, an image, an electronic label, a linear barcode, a two-dimensional barcode or a quick response code, wherein the exchange interface is used to provide an exchange, an acquirement and/or a recycle of a gas storage canister (36).

3. The gas storage canister exchange system (3) according to claim 2, wherein each the exchange cabinet (30) has a sensing component, the sensing component is used to read and write information of the identification label or provide a recognition of the gas storage canister (36) and an identity of the user, and the sensing component is one of a barcode scanner, an electronic label reader and writer, a RFID reader and writer, a NFC interface, an electronic device having a reading function, an electronic device having a writing function, and an electronic device having reading and writing functions.

4. The gas storage canister exchange system (3) according to claim 2, wherein the user interface is a transmission and display interface, and the user interface is connected with at least one remote server or at least one cloud management system (1) through a transmission network so as to display a status and a related information between the gas storage canister (36), the gas storage canister exchange system (3), and the remote server or the cloud management system (1).

5. The gas storage canister exchange system (3) according to claim 3, wherein the sensing component determines whether the empty gas storage canister (36) is certified, when the empty gas storage canister (36) is certified, the empty gas storage canister (36) is recycled by the exchange cabinet (30), and the full-filled gas storage canister (36) is sent to the exchange interface and the system information is updated, so that the full-filled gas storage canister (36) is acquired by the user, and when the empty gas storage canister (36) is not certified, an error message is sent to ask the user to get the empty gas storage canister (36) back or exchange another empty gas storage canister (36); wherein a used amount of gas or fuel of the exchanged gas storage canister (36) is calculated according to data read by the sensing component so as to charge the user or link to a cash flow system for requesting a payment or a debit, wherein the used amount of gas or fuel is calculated based on gas capacity, weight or flow of the gas storage canister (36); wherein a related certification is provided by the user or certification data is entered by the user through the sensing component or a user interface so as to determine whether the user is certified.

6. The gas storage canister exchange system (3) according to claim 2, wherein the user interface is a transmission and display interface which is provided to the user for input and operation, and the user interface is connected with a remote server or a cloud management system (1) through a transmission network so as to display a status and a related information between the gas storage canister (36), the gas storage canister exchange system (3), and the remote server or the cloud management system (1) for uploading data and updating the system information; wherein a gas storage canister storage information including a location of the gas storage canister exchange system (3) and a number of exchangeable gas storage canisters (36) are provided by connecting with the remote server or the cloud management system (1) through a mobile application or a network; wherein the cloud management system (1) includes at least one server used for receiving and sending messages, storage, computation, calculation, publishing or notification.

7. A logistics management system (5) of gas storage canister exchange, replenishment and recycle, comprising:
at least one gas storage canister exchange system (3), at least comprising at least one full-filled gas storage canister (36) and at least one exchange cabinet (30), wherein the full-filled gas storage canister (36) is used to supply gas, wherein the exchange cabinet (30) has a storage space used to store the at least one full-filled gas storage canister (36) and/or at least one empty gas storage canister (36), and wherein the exchange cabinet (30) has an exchange interface used to provide a gas storage canister exchange,
wherein when a storage amount of the full-filled gas storage canister (36) of each the gas storage canister exchange system (3) is less than a safe storage amount, a canister replenishment message is sent to the logistics management system (5) and further sent to a logistics center after organization so as to perform a canister replenishment and recycle operation.

8. The logistics management system (5) of gas storage canister exchange, replenishment and recycle according to claim 7, wherein the gas storage canister exchange system (3) is combined with a local gas-filling station (4) to directly perform a gas-filling operation or a canister exchange and replenishment operation, wherein the gas storage canister exchange system (3) comprises at least one user interface, and the user interface is disposed on the exchange cabinet (30); wherein the user interface is a transmission and display interface, and the user interface is connected with at least one remote server or at least one cloud management system (1) through a transmission network so as to display a status and a related information between the gas storage canister (36), the gas storage canister exchange system (3), and the remote server or the cloud management system (1).

9. The logistics management system (5) of gas storage canister exchange, replenishment and recycle according to claim 7, further comprising a cloud management system (1), wherein the cloud management system (1) comprises at least one server used to receive and send messages.

10. The logistics management system (5) of gas storage canister exchange, replenishment and recycle according to any one of claims 7 to 9, wherein after the logistics center receives the canister replenishment message, the full-filled gas storage canister (36) is delivered to designated gas storage canister exchange system (3) to perform a canister replenishment operation through a replenishment operator with a logistics vehicle, and simultaneously the exchanged empty gas storage canister (36) is delivered to a central gas-filling factory or station (6) to be recycled, refilled and reused.

11. A cloud management system (1) of gas storage canister exchange, at least comprising:
at least one gas storage canister exchange system (3) used to perform a replenishment, an acquirement, an exchange and a recycle of gas storage canisters (36), wherein the gas storage canister exchange system (3) at least comprises at least one full-filled gas storage canister (36) and at least one exchange cabinet (30), wherein the full-filled gas storage canister (36) is used to supply gas, wherein the exchange cabinet (30) has a storage space used to store the at least one full-filled gas storage canister (36) and/or at least one empty gas storage canister (36), wherein the exchange cabinet (30) has an exchange interface used to provide a gas storage canister exchange;
a cloud management device (1) comprising at least one server used for receiving and sending messages, storage, computation, calculation, publishing or notification.

12. The cloud management system (1) of gas storage canister exchange according to claim 11, wherein when a storage amount of the full-filled gas storage canister (36) of each the gas storage canister exchange system (3) is less than a safe storage amount, a canister replenishment message is sent to the cloud management system (1), wherein after an organization by the cloud management system (1), the canister replenishment message is sent to a logistics management system (5) to make a logistics center perform a canister replenishment and recycle operation, and wherein the gas storage canister exchange system (3) further comprises at least one user interface, and the user interface is disposed on the exchange cabinet (30).

13. The cloud management system (1) of gas storage canister exchange according to claim 11, wherein a related certification is provided by the user or certification data is entered by the user through the sensing component or the user interface so as to obtain an approval from the cloud management system (1) for acquiring the full-filled gas storage canister (36) nearby without having a gas storage canister (36) to be exchanged or directly having the empty gas storage canister (36) recycled.

14. The cloud management system (1) of gas storage canister exchange according to any one of claims 11 to 13, wherein a location and information of an exchangeable gas storage canister (36) is provided through a mobile application or a login of a network connected with the cloud management system (1), so that a user is able to quickly arrive at the location to perform the gas storage canister exchange and obtain a related information; wherein a gas storage canister exchange information is controlled and managed by the cloud management system (1), and simulations and analyses of usage mode, exchange frequency, ambient temperature, humidity, vehicle or non-vehicle information, driving mileage, historical record, and carbon reduction are performed based on the data received to implement control, management, and data analysis of the gas storage canister exchange information.

15. A gas storage canister exchange system (3), at least comprising:
at least one full-filled gas storage canister (36) used to supply gas; and
at least one exchange cabinet (30) having a storage space and an exchange interface;
wherein a related certification is provided by the user or certification data is entered by the user through a sensing component and/or a user interface so as to obtain an approval from a remote server or a cloud management system (1) for acquiring the full-filled gas storage canister (36) nearby without having a gas storage canister (36) to be exchanged or directly having the empty gas storage canister (36) recycled.
